# EUROPEAN PATENT APPLICATION

(11) **EP 1 898 286 A1**
(43) Date of publication of application: **12.03.2008**
(21) Application number: 07405171.5
(22) Date of filing: 15.06.2007
(51) Int. Cl.: G05B 19/4063

(54) **Support system for failure prognosis, warning and restoration operation of machine**

(30) Priority: 29.08.2006 JP 2006232339
(71) Applicant: YAMAZAKI MAZAK CORPORATION, Niwa-gun, Aichi (JP)
(72) Inventor: Yamazaki, Tsunehiko, Niwa-gun, Aichi Pref. (JP); Miyakawa, Naoomi, Niwa-gun, Aichi Pref. (JP)
(74) Representative: Moinas, Michel

(57) **Abstract**

The invention provides a system attached to a laser beam machine for supporting failure prognosis, warning and restoration operation by monitoring the status of the machine. A laser beam machine 1 has a pallet 20 supported on a bed 10, and subjects a work W₁ to laser processing. The management unit 100 attached to the machine 1 is connected via an internet connection to a server 2 at a service center, and also transmits the status of the machine to a cellular phone 3 or a personal computer 4 of an administrator. The management unit 100 has a large image display unit 200, through which the status of the machine is output via messages and audio so as to notify the operator of necessary restoration operations. The procedures of restoration operations are output via image and message, supporting the operation of the operator.

## Description

### BACKGROUND OF THE INVENTION

### Field of the invention

The present invention relates to a support system for failure prognosis, warning and restoration operation of a machine tool, especially a laser beam machine.

### Description of the related art

Japanese Patent Application Laid-Open Publications No. 11-119815, No. 9-222911, No. 7-156044, No. 7-302214, No. 6-113033, No. 6-149330 and No. 5-150818 (patent documents 1 through 7) disclose failure diagnosis and failure prognosis systems of machine tools.

The systems disclosed in patent documents 1 through 7 all have a host computer installed at a service center or the like connected via a communication line to the machine tool to predict and diagnose failure of the machine.

### SUMMARY OF THE INVENTION

The object of the present invention is to provide a support system having a management unit with a large image display unit attached to the machine for displaying messages related to failure and maintenance which are color-coded to show the importance thereof on the screen to notify the operator to take appropriate action, and to display actual procedures for maintenance operation or inspection operation via images.

In order to achieve the above object, the present invention provides a support system for failure prognosis, warning and restoration operation of a machine comprising a machine and a management unit attached to the machine; the management unit comprising a communication means for communicating with the machine, an image display unit for displaying the status or the like of the machine, an audio output means, and a communication means for communicating via a public line with a remote server; the management unit further having a function to output the status of the machine on the screen as message, display in color and output via audio a warning level when failure occurs, and a function to output a procedure for restoring the failure via image and message.

In addition, the management unit has a function to keep the lapse time of each periodic inspection item of the machine, a function to compute a ratio of the lapse time and a predetermined time set in advance for each inspection item, and a function to display a warning on an image display when the ratio reaches a predetermined ratio and to notify the same to a cellular phone of an operator.

The effects of the present invention are as follows.

According to the present invention, the management unit attached to the machine constantly monitors the state of the machine, performs failure prognosis and outputs a warning if necessary. The warning level is shown by a color-coded message or the like on the display screen, and an audio output is further performed. Therefore, the present invention enables to notify the status accurately to the operator.

Furthermore, the present invention enables to display the procedures for maintenance and failure restoration operations through images and messages, supporting the operator to perform appropriate restoration in a short time.

### BRIEF DESCRIPTION OF THE DRAWINGS

FIG. 1 is an explanatory view showing the overall configuration of a support system for a failure prognosis, warning and restoration operation of a machine according to the present invention;
FIG. 2 is an explanatory view showing one example of a screen displayed on an image displaying unit disposed on an upper portion of a management unit; and
FIG. 3 is an explanatory view showing one example of a screen displayed on an image displaying unit disposed on an upper portion of a management unit.

### DETAILED DESCRIPTION OF THE PREFERRED EMBODIMENTS

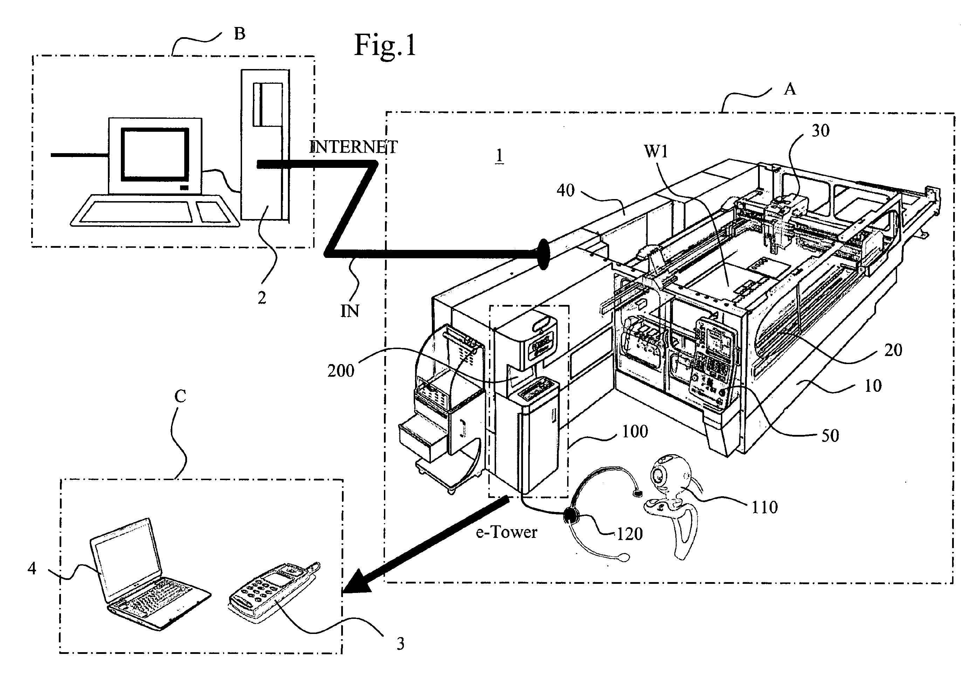

FIG. 1 is an explanatory view showing the overall configuration of a failure prognosis, warning and restoration operation support system of a machine according to the present invention.

The support system comprises a laser beam machine 1 operated at a customer site A, a server 2 installed at a service center B of the laser beam machine, and a cellular phone 3 or a personal computer 4 administrated by an administrator C at the customer site.

The laser beam machine 1 has a pallet 20 supported on a bed 10, and on the pallet 20 is placed a work W₁. The laser beam output from a laser oscillator 40 is sent to a working head 30 for subjecting the work W₁ to laser processing. A processing program and other programs are supplied via an NC control unit 50.

This machine 1 comprises a management unit 100 called an "e-Tower". The management unit 100 is connected via an internet connection IN to a server 2 of the service center B, and also transmits the information regarding the machine via a wireless connection or the like to the cellular phone 3 or the personal computer 4 of the administrator C. The management unit 100 includes a web camera 110, a head set 120 and the like wearable by the operator, which enables the unit to transmit video and audio information.

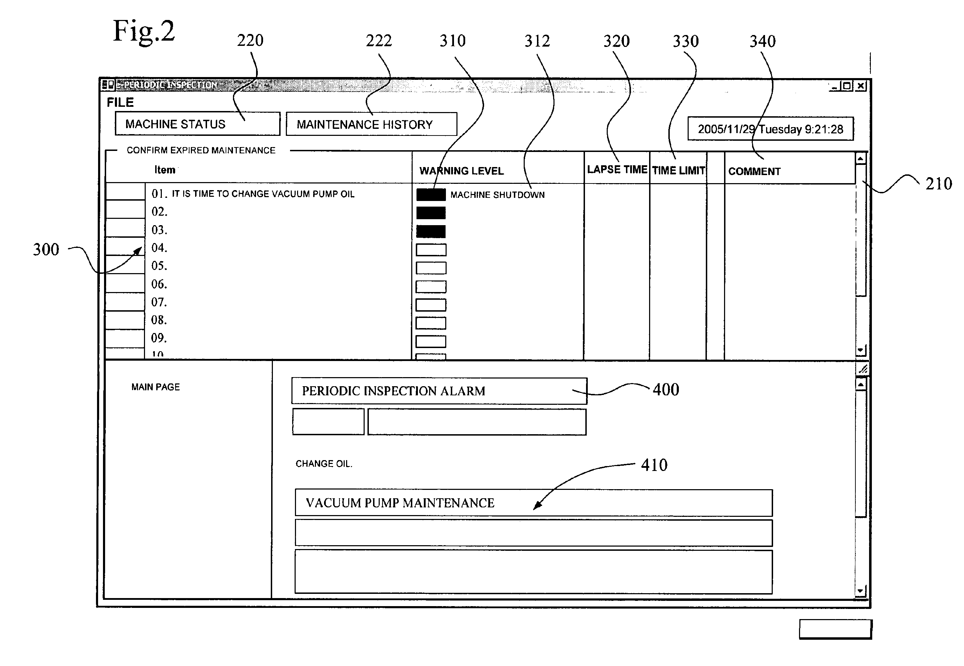

FIG. 2 shows one example of a screen 210 displayed on an image display unit 200 disposed on the upper portion of the management unit 100.

On the screen 210 is prepared an icon 220 regarding "machine status" and an icon 222 regarding "maintenance history".

When the icon 220 regarding "machine status" is selected, a message 300 regarding the status of the machine is displayed on the screen 210. Further, a warning level 310 regarding each message is indicated via a color-coded label, and a message 312 regarding the warning level is also displayed. An example of the color-coded warning levels 310 is as follows. For example, red indicates "machine shutdown warning", and with the consent of the customer, the machine enters an inoperable state. Similarly, orange "warning" indicates that the periodic inspection term has expired. Yellow "warning notice" indicates that the periodic inspection term is approaching. Green indicates that the machine is operating normally.

The warning is output via alarm and audio in addition to the above-described message.

Further, on the screen 210 are displayed lapse time 320 from the previous maintenance, time limit 330 set in advance, and comments 340. The contents of the comments 340 can be, for example, an advice to contact the machine manufacturer.

Furthermore, a "periodic inspection alarm" 400 is displayed on the screen 210. The periodic inspection alarm shows, for example, that it is time to change the oil of a vacuum pump provided in the machine 1. Further, a manual regarding the maintenance and oil change of the vacuum pump can be displayed as a message 410.

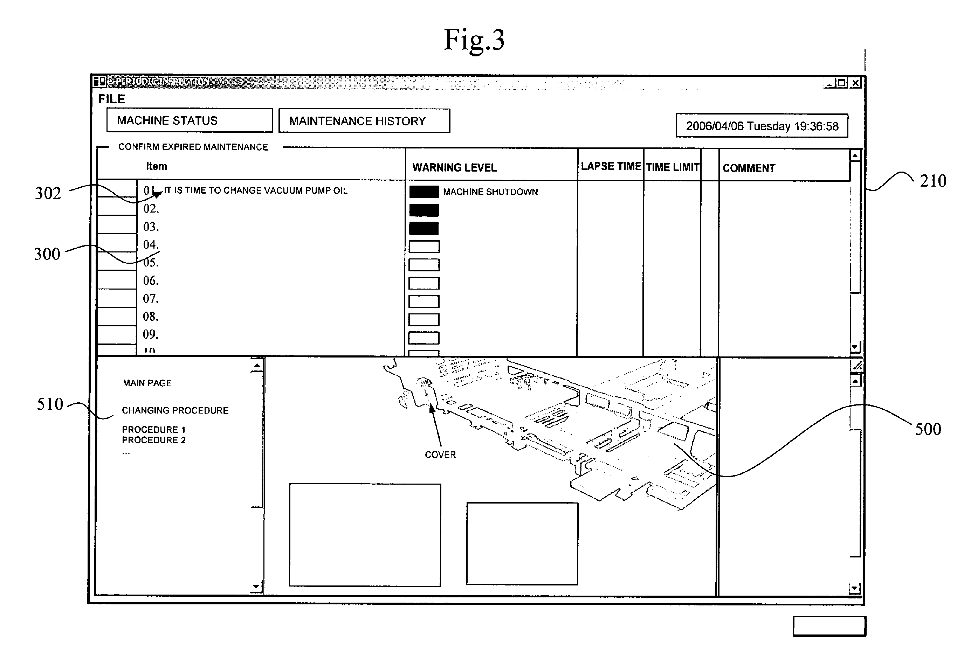

FIG. 3 shows a similar screen display as FIG. 2. For example, message 302 indicates that "it is time to change the vacuum pump oil", and when the operator clicks this message 302, a photograph of the vacuum pump unit of the machine or the like can be displayed on a screen 500. Furthermore, the procedure for changing oils is displayed on page 510.

## Claims

1. A support system for failure prognosis, warning and restoration operation of a machine comprising a machine and a management unit attached to the machine;
the management unit comprising a communication means for communicating with the machine, an image display unit for displaying the status or the like of the machine, an audio output means, and a communication means for communicating via a public line with a remote server;
the management unit further having a function to output the status of the machine on the screen as message, display in color and output via audio a warning level when failure occurs, and a function to output a procedure for restoring the failure via image and message.

2. The support system for failure prognosis, warning and restoration operation of a machine according to claim 1, wherein
the management unit has a function to keep the lapse time of each periodic inspection item of the machine, a function to compute a ratio of the lapse time and a predetermined time set in advance for each inspection item, and a function to display a warning on an image display when the ratio reaches a predetermined ratio and to notify the same to a cellular phone of an operator.

3. The support system for failure prognosis, warning and restoration operation of a machine according to claim 1, wherein the machine is a laser beam machine.
